# EUROPEAN PATENT APPLICATION

(11) **EP 3 142 337 A1**
(43) Date of publication of application: **15.03.2017**
(21) Application number: 16188003.4
(22) Date of filing: 09.09.2016
(51) Int. Cl.: H04L 29/08, H04W 4/00

(54) **METHOD AND APPARATUS FOR INSTALLING APPLICATION AND SMART DEVICE USING THEM**

(30) Priority: 14.09.2015 CN 201510583764
(71) Applicant: Xiaomi Inc., Beijing 100085 (CN)
(72) Inventor: MU, Shuang, Beijing 100085 (CN); YANG, Shunzhi, Beijing 100085 (CN); ZHANG, Long, Beijing 100085 (CN)
(74) Representative: Delumeau, François Guy

(57) **Abstract**

The present disclosure provides a method, an apparatus for installing an application and a smart device, including: establishing (101) a communication connection with a smart device; and sending (102) a control instruction to the smart device through the communication connection, wherein the control instruction includes application identification of the application, and the control instruction is configured to instruct the smart device to acquire and install the application according to the application identification of the application. Through the technical solution of the present disclose, a user may install an application for the smart device remotely by using the apparatus for installing an application. That is, no matter when and no matter where, as long as the user has an apparatus for installing an application convenient for operations in his/her hand, he/she may conveniently install applications that need to be installed for any other smart device.

## Description

### TECHNICAL FIELD

The present disclosure generally relates to the field of smart devices, and more particularly, to a method and an apparatus for installing an application and a smart device using the method or the apparatus.

### BACKGROUND

A smart device adopts an open operating system, and it may install an application program to achieve a corresponding function. The application field of the smart device, such as smart phones, IPADs, smart bracelets, smart home devices and the like, is very wide.

With the popularity of the smart device, software applications usually need to be installed in the smart device. For example, a user purchases a smart phone for his/her parents at home far away, however, his/her parents cannot install applications in the smart phone on their own. As another example, a screen of a smart watch is small, which is not convenient for operations of installing applications.

### SUMMARY

The present disclosure provides a method, an apparatus for installing an application and a smart device. The technical solution is as follows.

According to a first aspect, the invention relates to a method for installing an application, performed on an apparatus for installing an application, including: establishing a communication connection with a smart device; and sending a control instruction to the smart device through the communication connection, wherein the control instruction includes application identification of the application, and the control instruction is configured to instruct the smart device to acquire and install the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

In a particular embodiment, the step of sending a control instruction to the smart device through the communication connection includes: acquiring identification of an application store, wherein the smart device is installed with the application store, and the application store is configured to provide an installation package for the smart device to download the application; and sending a control instruction to the smart device through the communication connection, wherein the control instruction includes application identification of the application and the identification of the application store, and the control instruction is configured to instruct the smart device to call the application store according to the identification of the application store, search the application store to acquire the application according to the application identification of the application, and install the application.

The present implementation has the following beneficial effects: it may acquire an application that needs to be installed quickly and accurately, avoid mistakenly installing an application due to similar application identification, so as to improve efficiency and accuracy of installing an application.

In a particular embodiment, the step of establishing a communication connection with a smart device includes: receiving a connection request sent by the smart device, wherein the connection request includes device identification of the smart device; and establishing the communication connection with the smart device according to the device identification of the smart device.

The present implementation has the following beneficial effects: a communication connection between an apparatus for installing an application and a smart device may be established.

According to a second aspect, the invention relates to a method for installing an application, performed on a smart device, including: establishing a communication connection with an apparatus for installing an application; receiving a control instruction sent by the apparatus for installing an application through the communication connection, wherein the control instruction includes application identification of the application; and acquiring and installing the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

In a particular embodiment, the control instruction includes the application identification of the application and identification of an application store, and the apparatus for installing an application is installed with the application store; and the step of acquiring and installing the application according to the application identification of the application includes: calling the application store according to the identification of the application store, searching the application store to acquire the application according to the application identification of the application, and installing the application.

The present implementation has the following beneficial effects: it may acquire an application that needs to be installed quickly and accurately, avoid mistakenly installing an application due to similar application identification, so as to improve efficiency and accuracy of installing an application.

In a particular embodiment, the step of establishing a communication connection with an apparatus for installing an application includes: sending a connection request to the apparatus for installing an application, wherein the connection request includes device identification of the smart device, and the connection request is configured to make the apparatus for installing an application establish a communication connection with the smart device according to the device identification of the smart device.

The present implementation has the following beneficial effects: a communication connection between an apparatus for installing an application and a smart device may be established.

According to a third aspect, the invention relates to an apparatus for installing an application, including: a communication module configured to establish a communication connection with a smart device; and a sending module configured to send a control instruction to the smart device through the communication connection, wherein the control instruction includes application identification of the application, and the control instruction is configured to instruct the smart device to acquire and install the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

In a particular embodiment, the sending module includes: an acquiring sub-module configured to acquire identification of an application store, wherein the smart device is installed with the application store, and the application store is configured to provide an installation package for the smart device to download the application; and a sending sub-module configured to send a control instruction to the smart device through the communication connection, wherein the control instruction includes application identification of the application and the identification of the application store, and the control instruction is configured to instruct the smart device to call the application store according to the identification of the application store, search the application store to acquire the application according to the application identification of the application, and install the application.

The present implementation has the following beneficial effects: it may acquire an application that needs to be installed quickly and accurately, avoid mistakenly installing an application due to similar application identification, so as to improve efficiency and accuracy of installing an application.

In a particular embodiment, the communication module includes: a receiving sub-module configured to receive a connection request sent by the smart device, wherein the connection request includes device identification of the smart device; and a communication sub-module configured to establish the communication connection with the smart device according to the device identification of the smart device.

The present implementation has the following beneficial effects: a communication connection between an apparatus for installing an application and a smart device may be established.

According to a fourth aspect, the invention relates to a smart device, including: a communication module configured to establish a communication connection with an apparatus for installing an application; a receiving module configured to receive a control instruction sent by the apparatus for installing an application through the communication connection, wherein the control instruction includes application identification of the application; and a processing module configured to acquire and install the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

In a particular embodiment, the control instruction includes the application identification of the application and identification of an application store, and the apparatus for installing an application is installed with the application store; and the processing module includes: a searching sub-module configured to call the application store according to the identification of the application store, and search the application store to acquire the application according to the application identification of the application; and an installing sub-module configured to install the application.

The present implementation has the following beneficial effects: it may acquire an application that needs to be installed quickly and accurately, avoid mistakenly installing an application due to similar application identification, so as to improve efficiency and accuracy of installing an application.

In a particular embodiment, the communication module includes: a sending sub-module configured to send a connection request to the apparatus for installing an application, wherein the connection request includes device identification of the smart device, and the connection request is configured to make the apparatus for installing an application establish a communication connection with the smart device according to the device identification of the smart device.

The present implementation has the following beneficial effects: a communication connection between an apparatus for installing an application and a smart device may be established.

According to a fifth aspect, the invention relates to an apparatus for installing an application, including: a processor; and a memory for storing instructions executable by the processor, wherein the processor is configured to perform: establishing a communication connection with a smart device; and sending a control instruction to the smart device through the communication connection, wherein the control instruction includes application identification of the application, and the control instruction is configured to instruct the smart device to acquire and install the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

According to a sixth aspect, the invention relates to a smart device, including: a processor; and a memory for storing instructions executable by the processor, wherein the processor is configured to perform: establishing a communication connection with an apparatus for installing an application; receiving a control instruction sent by the apparatus for installing an application through the communication connection, wherein the control instruction includes application identification of the application; and acquiring and installing the application according to the application identification of the application.

The present implementation has the following beneficial effects: when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

In one particular embodiment, the steps of at least one of the methods for installing an application mentioned above are determined by computer program instructions.

Consequently, according to a seventh aspect, the invention is also directed to a computer program for executing the steps of a method for installing an application as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1A is a flow chart illustrating a method for installing an application according to an exemplary embodiment;
Fig. 1B is a flow chart illustrating a method for installing an application according to another exemplary embodiment;
Fig. 2 is a flow chart illustrating a method for installing an application according to another exemplary embodiment;
Fig. 3A is a flow chart illustrating a method for installing an application according to an exemplary embodiment;
Fig. 3B is a flow chart illustrating a method for installing an application according to another exemplary embodiment;
Fig. 4 is a flow chart illustrating a method for installing an application according to another exemplary embodiment;
Fig. 5 is a flow chart illustrating a method for installing an application according to an exemplary embodiment;
Fig. 6A is a block diagram of an apparatus for installing an application according to an exemplary embodiment;
Fig. 6B is a block diagram of an apparatus for installing an application according to another exemplary embodiment;
Fig. 7 is a block diagram of a smart device according to another exemplary embodiment;
Fig. 8A is a block diagram of a smart device according to an exemplary embodiment;
Fig. 8B is a block diagram of a smart device according to another exemplary embodiment;
Fig. 9 is a block diagram of a smart device according to another exemplary embodiment;
Fig. 10 is a block diagram of an apparatus for installing an application according to an exemplary embodiment;
Fig. 11 is a block diagram of a smart device according to an exemplary embodiment;
Fig. 12 is a block diagram of an apparatus 1200 for installing an application according to an exemplary embodiment; and
Fig. 13 is a block diagram of a smart device 1300 according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

First of all, several terms involved in the embodiments of the present disclosure are explained.

A smart device includes, but is not limited to, any kind of entity electronic product having a capability of human-machine interaction with a user through a keyboard, a touchpad or a voice control device, such as a smart bracelet, a smart phone and the like. Those skilled in the art shall understand that other smart devices may also be included in the protection scope of the present disclosure if only they adopt the present disclosure.

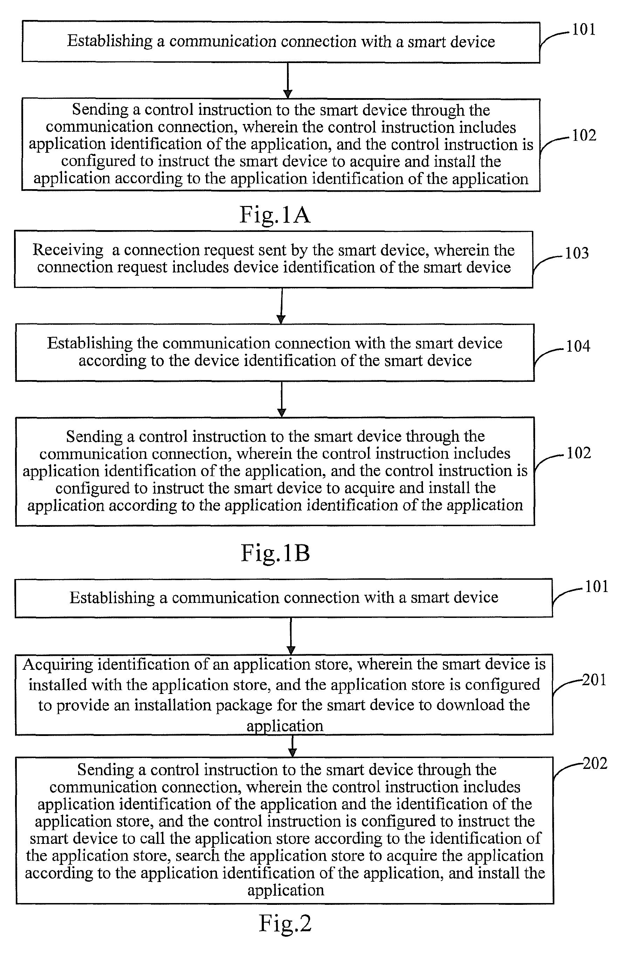

Fig. 1A is a flow chart illustrating a method for installing an application according to an exemplary embodiment. As shown in Fig. 1A, the present embodiment takes the method for installing an application, being applied in an apparatus for installing an application, as an example. The method for installing an application may include following steps.

In step 101, a communication connection with a smart device is established.

In step 102, a control instruction is sent to the smart device through the communication connection, wherein the control instruction includes application identification of the application, and the control instruction is configured to instruct the smart device to acquire and install the application according to the application identification of the application.

Wherein there may be a plurality of communication connection ways, for example, Wireless-Fidelity (Wi-Fi), 3^{rd} generation mobile communication technology (3G), 4^{th} generation mobile communication technology (4G), a Bluetooth connection and the like.

Specifically, an apparatus for installing an application may perform steps 101-102. The apparatus for installing an application may be provided in another smart device. Taking an actual application scenario as an example to illustrate, the scenario involves a scenario where an application is installed remotely:
due to actual situations, for example, the distance is too far, the user is not skilled in using the smart device, or the smart device itself is not convenient for the user to operate, and when the user needs to install an application in the smart device not convenient to operate under the above situations, based on the present technical solution, an apparatus for installing an application convenient for the user to operate may be prepared in advance. The apparatus may be provided in another smart device, for example, a portable smart phone skillfully used by the user. The communication connection between the apparatus for installing an application and the smart device is established, to achieve the subsequent technical solution.

Specifically, a process of establishing the communication connection may be as shown in Fig. 1B. Fig. 1B is a flow chart illustrating a method for installing an application according to another exemplary embodiment. Based on the implementation as shown in Fig. 1A, the step 101 may include following steps.

In step 103, a connection request sent by the smart device is received, wherein the connection request includes device identification of the smart device.

In step 104, the communication connection with the smart device is established according to the device identification of the smart device.

Through the above implementation, a communication connection with the smart device may be established. The specific technical solution may be determined according to actual situations, which is not limited in the present embodiment. Wherein device identification of the smart device includes, but is not limited to, International Mobile Equipment Identity (IMEI), a cellphone number corresponding to the smart device, a number of a physical network card, a system account corresponding to the smart device, and the like, as long as it is identification that may uniquely represent the identification of the smart device. Specifically, the device identification of the smart device may be acquired by manually inputting of the user, or it may be acquired by calling a contacts of the user. There may be many kinds of specific implementations.

In actual applications, communication connections may be established with a plurality of smart devices at the same time. That is, there may be at least one smart device.

In step 102, a control instruction is sent to the smart device through the communication connection, wherein the control instruction includes application identification of the application, and the control instruction is configured to instruct the smart device to acquire and install the application according to the application identification of the application.

Wherein the smart device may acquire an application by any way, for example, by searching through a search engine, or by searching an application store (for example, an APP store, an Android application store and the like) installed in the smart device.

Still take the above actual application scenario as an example to illustrate:
after the communication connection between the apparatus for installing an application and the smart device is established, the user may conveniently control the apparatus for installing an application to send a control instruction to the smart device through the established communication connection. The control instruction includes application identification of an application that the user intends to install in the smart device. Correspondingly, after the smart device receives the control instruction, according to the application identification therein, the corresponding application may be acquired and installed.

Specifically, the user may input the application identification of the application that he/she intends to install in the smart device through an interactive interface of the apparatus for installing an application, such that the apparatus for installing an application sends the application identification to the smart device.

In addition, in order to further facilitate operations of the user and improve convenience of installing an application, in actual applications, a corresponding shortcut push menu may be established for each application. When the user intends to install an application in the smart device, only "to install the application in the smart device" needs to be selected in the shortcut push menu corresponding to the application. Then the apparatus for installing an application may send the corresponding control instruction to the smart device, to achieve a remote installation of the application.

Accordingly, in the method for installing an application provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in another smart device. The smart device may accomplish the installation of the application according to the control instruction. Wherein the apparatus for installing an application may be provided in the smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

Fig. 2 is a flow chart illustrating a method for installing an application according to another exemplary embodiment. As shown in Fig. 2, based on any implementation described above, the step 102 may include following steps.

In step 201, identification of an application store is acquired, wherein the smart device is installed with the application store, and the application store is configured to provide an installation package for the smart device to download the application.

In step 202, a control instruction is sent to the smart device through the communication connection, wherein the control instruction includes the application identification of the application and identification of the application store, and the control instruction is configured to instruct the smart device to call the application store according to the identification of the application store, search the application store to acquire the application according to the application identification of the application, and install the application.

Wherein the application store is commonly known as an APP STORE, which is an electric application store that specially provides application download services for a smart device (such as a mobile device cellphone, a tablet computer and the like).

Taking an actual application scenario as an example to illustrate, the scenario involves a scenario where an application is installed remotely:
when the user needs to install an application in a smart device not convenient to operate, based on the present technical solution, an apparatus for installing an application convenient for the user to operate, for example, a portable smart phone skillfully used by the user, may be prepared in advance. The communication connection between the apparatus for installing an application and the smart device is established; after the communication connection is established, the apparatus for installing an application acquires application stores both installed in the apparatus for installing an application and the smart device according to the application stores installed in the apparatus for installing an application and the application stores installed in the smart device; the apparatus for installing an application sends a control instruction to the smart device through the established communication connection, wherein the control instruction includes application identification of the application that the user intends to install in the smart device and identification of the application store. Correspondingly, after the smart device receives the control instruction, it opens the corresponding application store to acquire the corresponding application, and installs the application.

Specifically, besides informing the application identification of the application that needs to be installed in the smart device, the present technical solution further informs an approach to acquire the application. That is, the application stores only installed in both of the two smart devices are opened to acquire the corresponding application. Therefore, the smart device may acquire an application that needs to be installed quickly and accurately, avoid mistakenly installing an application due to similar application identification, so as to improve efficiency and accuracy of installing an application.

Accordingly, in the method for installing an application provided by the present embodiment, when a user intends to install an application in a smart device, a communication connection between the apparatus for installing an application and the smart device is established. A control instruction is sent to the smart device through the apparatus for installing an application, wherein the control instruction includes application identification of an application that needs to be installed and identification of an application store used to acquire the application. The smart device opens a corresponding application store according to the control instruction, acquires the application from the application store, and accomplishes the installation of the application. Through the above technical solution, the smart device may acquire an application that needs to be installed quickly and accurately, avoid mistakenly installing an application due to similar application identification, so as to improve efficiency and accuracy of installing an application.

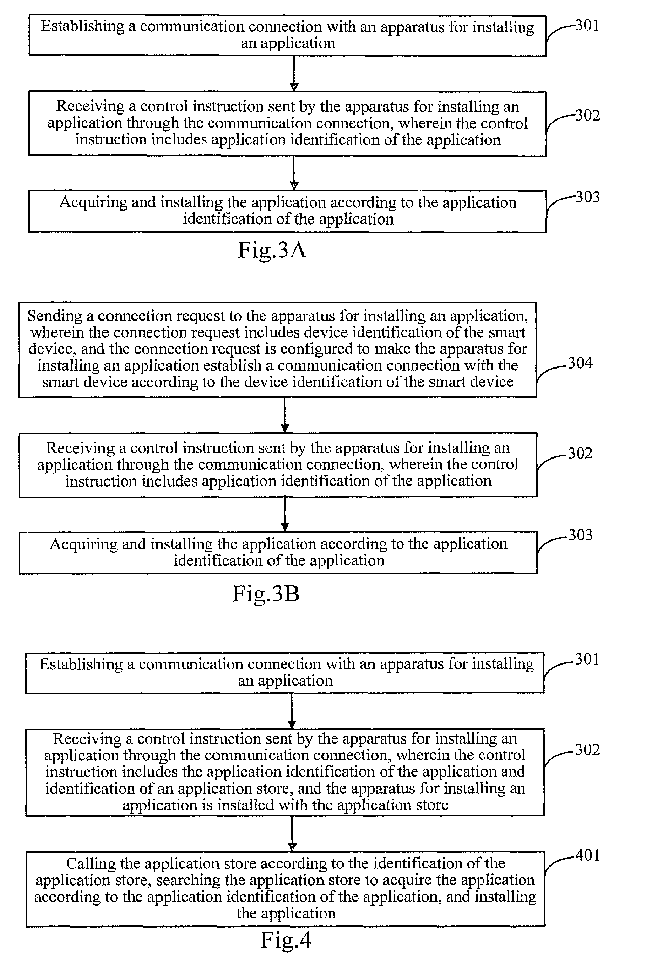

Fig. 3A is a flow chart illustrating a method for installing an application according to an exemplary embodiment. As shown in Fig. 3A, the present embodiment takes the method for installing an application, being applied in the smart device, as an example to illustrate. The method for installing an application may include following steps.

In step 301, a communication connection with an apparatus for installing an application is established.

Specifically, a process of establishing the communication connection is as shown in Fig. 3B. Fig. 3B is a flow chart illustrating a method for installing an application according to another exemplary embodiment. Based on the implementation as shown in Fig. 3A, the step 301 may include following steps.

In step 304, a connection request is sent to the apparatus for installing an application, wherein the connection request includes device identification of the smart device, and the connection request is configured to make the apparatus for installing an application establish a communication connection with the smart device according to the device identification of the smart device.

Through the above implementation, a communication connection with the smart device may be established. The specific technical solution may be determined according to actual situations, which is not limited in the present embodiment. Wherein device identification of the smart device includes, but is not limited to, International Mobile Equipment Identity (IMEI), a cellphone number corresponding to the smart device, a number of a physical network card, a system account corresponding to the smart device, and the like.

In step 302, a control instruction sent by the apparatus for installing an application through the communication connection is received, wherein the control instruction includes application identification of the application.

In step 303, the application is acquired and installed according to the application identification of the application.

In actual applications, besides that the apparatus for installing an application may remotely install an application for other smart devices, other smart devices may also remotely install the application for the apparatus for installing an application. That is, the remote installing application may be achieved mutually between the smart devices established with the communication connection.

Specifically, a smart device may perform steps 301-303. Taking an actual application scenario as an example to illustrate, the scenario involves a scenario where an application is installed remotely:
when an application needs to be installed in a smart device, based on the present technical solution, a communication connection between the apparatus for installing an application and the smart device may be established; after the communication connection is established, the user may conveniently control the apparatus for installing an application to send a control instruction to the smart device through the established communication connection. The control instruction includes application identification of an application that the user intends to install in the smart device. Correspondingly, after the smart device receives the control instruction, according to the application identification therein, the corresponding application may be acquired and installed.

Accordingly, in the method for installing an application provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

Fig. 4 is a flow chart illustrating a method for installing an application according to another exemplary embodiment. As shown in Fig. 4, based on any implementation described above, the control instruction includes application identification of the application and identification of the application store. The apparatus for installing an application is installed with the application store.

Correspondingly, the step 303 may include following steps.

In step 401, the application store is called according to the identification of the application store, and the application store is searched to acquire the application according to the application identification of the application, and the application is installed.

Wherein the application store is an electric application store that specially provides application download services for a smart device (such as a mobile device cellphone, a tablet computer and the like).

Taking an actual application scenario as an example to illustrate, the scenario involves a scenario where an application is installed remotely:
when the user needs to install an application in a smart device, based on the present technical solution, an apparatus for installing an application may be prepared in advance. The communication connection between the apparatus for installing an application and the smart device is established; after the communication connection is established, the apparatus for installing an application acquires application stores both installed in the apparatus for installing an application and the smart device according to the application stores installed in the apparatus for installing an application and the application stores installed in the smart device; the apparatus for installing an application sends a control instruction to the smart device through the established communication connection, wherein the control instruction includes application identification of the application that the user intends to install in the smart device and identification of the application store. Correspondingly, after the smart device receives the control instruction, it opens the corresponding application store to acquire the corresponding application, and installs the application.

Specifically, in the present technical solution, besides that the application identification of the application that needs to be installed is included in the control instruction received by the smart device, an approach of the application is further acquired. That is, the application stores only installed in both of the two smart devices are opened to acquire the corresponding application. Therefore, the smart device may acquire an application that needs to be installed quickly and accurately, avoid mistakenly installing an application due to similar application identification, so as to improve efficiency and accuracy of installing an application.

Accordingly, in the method for installing an application provided by the present embodiment, when a user intends to install an application in a smart device, a communication connection between the apparatus for installing an application and the smart device is established. A control instruction is sent to the smart device through the apparatus for installing an application, wherein the control instruction includes application identification of an application that needs to be installed and identification of an application store used to acquire the application. The smart device opens a corresponding application store according to the control instruction, acquires the application from the application store, and accomplishes the installation of the application. Through the above technical solution, an application that needs to be installed may be acquired quickly and accurately, which avoids mistakenly installing an application due to similar application identification, so as to improve efficiency and accuracy of installing an application.

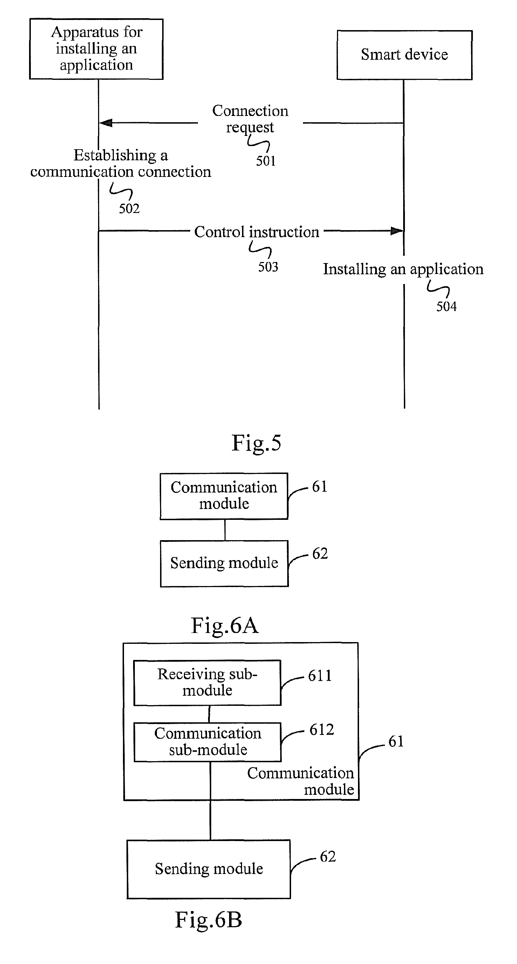

Fig. 5 is a flow chart illustrating a method for installing an application according to an exemplary embodiment. As shown in Fig. 5, the present embodiment takes the method for installing an application, being applied in the apparatus for installing an application and the smart device, as an example to illustrate. The method for installing an application may include following steps.

In step 501, the smart device sends a connection request to the apparatus for installing an application.

In step 502, the apparatus for installing an application establishes a communication connection with the smart device according to the connection request.

In step 503, the apparatus for installing an application sends a control instruction to the smart device through the communication connection, wherein the control instruction includes application identification of the application.

In step 504, the smart device acquires and installs the application according to the application identification of the application.

Accordingly, in the method for installing an application provided by the present embodiment, when a user intends to install an application in a smart device. An apparatus for installing an application may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

A procedure implementing the method for installing an application has been described as above. The procedure may be interactively implemented by a smart device, an internal function and structure of which are described in the following.

Fig. 6A is a block diagram of an apparatus for installing an application according to an exemplary embodiment. As shown in Fig. 6A, the smart device includes:
a communication module 61 configured to establish a communication connection with a smart device; and
a sending module 62 configured to send a control instruction to the smart device through the communication connection, wherein the control instruction includes application identification of the application, and the control instruction is configured to instruct the smart device to acquire and install the application according to the application identification of the application.

Wherein there may be a plurality of communication connection ways, for example, Wireless-Fidelity (Wi-Fi), 3^{rd} generation mobile communication technology (3G), 4^{th} generation mobile communication technology (4G), a Bluetooth connection and the like.

Specifically, the apparatus for installing an application may be provided in another smart device. Taking an actual application scenario as an example to illustrate, the scenario involves a scenario where an application is installed remotely:
the communication module 61 establishes a communication connection between the apparatus for installing an application and the smart device; after the communication module 61 establishes the communication connection between the apparatus for installing an application and the smart device, the sending module 62 sends a control instruction to the smart device through the established communication connection, wherein the control instruction includes the application identification of an application that the user intends to install in the smart device. Correspondingly, after the smart device receives the control instruction, it may acquire and install the corresponding application according to the application identification therein.

Specifically, a process of establishing the communication connection may be shown as Fig. 6B. Fig. 6B is a block diagram of an apparatus for installing an application according to another exemplary embodiment. Based on the embodiment as shown in Fig. 6A, the communication module 61 includes:
a receiving sub-module 611 configured to receive a connection request sent by the smart device, wherein the connection request includes device identification of the smart device; and
a communication sub-module 612 configured to establish the communication connection with the smart device according to the device identification of the smart device.

Through the above implementation, a communication connection with the smart device may be established. The specific technical solution may be determined according to actual situations, which is not limited in the present embodiment. Wherein device identification of the smart device includes, but is not limited to, International Mobile Equipment Identity (IMEI), a cellphone number corresponding to the smart device, a number of a physical network card, a system account corresponding to the smart device, and the like.

In actual applications, communication connections may be established with a plurality of smart devices at the same time. That is, there may be at least one smart device.

Wherein the smart device may acquire an application by any way, for example, by searching through a search engine, or by searching an application store (for example, an APP store, an Android application store and the like) installed in the smart device.

Specifically, the user may input the application identification of the application that he/she intends to install in the smart device through an interactive interface of the apparatus for installing an application, such that the apparatus for installing an application sends the application identification to the smart device.

In addition, in order to further facilitate operations of the user and improve convenience of installing an application, in actual applications, a corresponding shortcut push menu may be established for each application. When the user intends to install an application in the smart device, only "to install the application in the smart device" needs to be selected in the shortcut push menu corresponding to the application. A smart terminal may be controlled to send the corresponding control instruction to the smart device, to achieve a remote installation of the application.

Accordingly, in the smart device provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

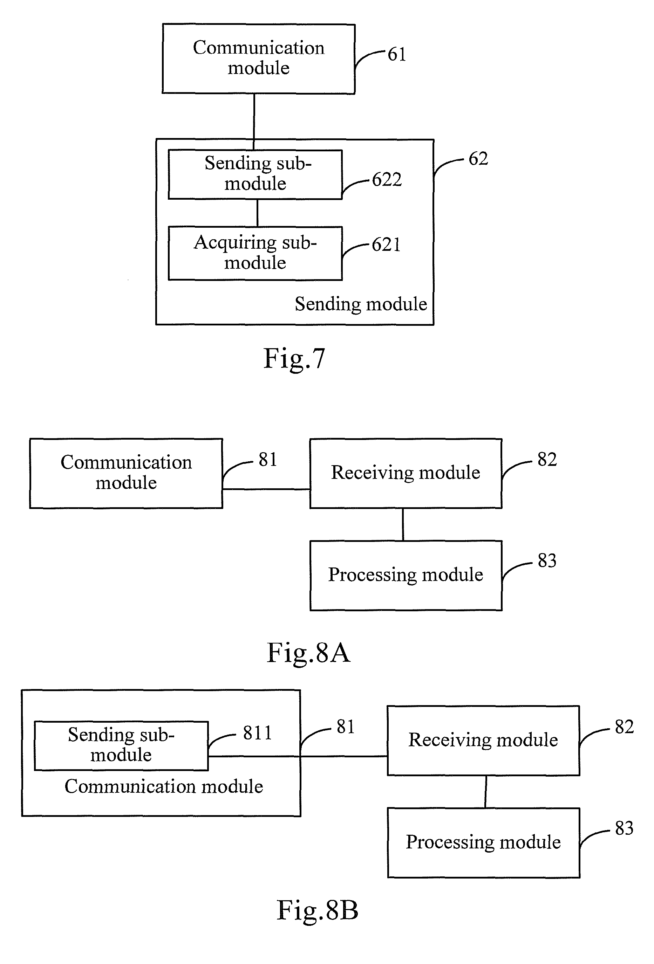

Fig. 7 is a block diagram of a smart device according to another exemplary embodiment. As shown in Fig. 7, based on any above implementation described above, the sending module 62 includes:
an acquiring sub-module 621 configured to acquire identification of an application store, wherein the smart device is installed with the application store, and the application store is configured to provide an installation package for the smart device to download the application; and
a sending sub-module 622 configured to send a control instruction to the smart device through the communication connection, wherein the control instruction includes application identification of the application and the identification of the application store, and the control instruction is configured to instruct the smart device to call the application store according to the identification of the application store, search the application store to acquire the application according to the application identification of the application, and install the application.

Wherein the application store is an electric application store that specially provides application download services for a smart device (such as a mobile device cellphone, a tablet computer and the like).

Taking an actual application scenario as an example to illustrate, the scenario involves a scenario where an application is installed remotely:
the communication module 61 establishes a communication connection with the smart device; after the communication module 61 establishes the communication connection, the acquiring sub-module 621 acquires application stores both installed in the apparatus for installing an application and the smart device according to the application stores installed in the apparatus for installing an application and the application stores installed in the smart device; the sending sub-module 622 sends a control instruction to the smart device through the established communication connection, wherein the control instruction includes application identification of the application that the user intends to install in the smart device and identification of the application store. Correspondingly, after the smart device receives the control instruction, it opens the corresponding application store to acquire the corresponding application, and installs the application.

Specifically, in the present technical solution, besides sending the application identification of the application that needs to be installed to the smart device, the sending sub-module 622 further sends an approach for the smart device to acquire the application. That is, the application stores only installed in both of the two smart devices are opened to acquire the corresponding application. Therefore, the smart device may acquire an application that needs to be installed quickly and accurately, avoid mistakenly installing an application due to similar application identification, so as to improve efficiency and accuracy of installing an application.

Accordingly, in the smart device provided by the present embodiment, when a user intends to install an application in a smart device, a communication connection between the apparatus for installing an application and the smart device is established. A control instruction is sent to the smart device through the apparatus for installing an application, wherein the control instruction includes application identification of an application that needs to be installed and identification of an application store used to acquire the application. The smart device opens a corresponding application store according to the control instruction, acquires the application from the application store, and accomplishes the installation of the application. Through the above technical solution, an application that needs to be installed may be acquired quickly and accurately, which avoids mistakenly installing an application due to similar application identification, so as to improve efficiency and accuracy of installing an application.

Fig. 8A is a block diagram of a smart device according to an exemplary embodiment. As shown in Fig. 8A, the smart device includes:
a communication module 81 configured to establish a communication connection with an apparatus for installing an application;
specifically, a process of establishing the communication connection is shown as Fig. 8B. Fig. 8B is a block diagram of a smart device according to another exemplary embodiment. Based on the embodiment as shown in Fig. 8A, the communication module 81 may include:
a sending sub-module 811 configured to send a connection request to the apparatus for installing an application, wherein the connection request includes device identification of the smart device, and the connection request is configured to make the apparatus for installing an application establish a communication connection with the smart device according to the device identification of the smart device.

Through the above implementation, a communication connection with the smart device may be established. The specific technical solution may be determined according to actual situations, which is not limited in the present embodiment. Wherein device identification of the smart device includes, but is not limited to, International Mobile Equipment Identity (IMEI), a cellphone number corresponding to the smart device, a number of a physical network card, a system account corresponding to the smart device, and the like.

A receiving module 82 is configured to receive a control instruction sent by the apparatus for installing an application through the communication connection, wherein the control instruction includes application identification of the application; and
a processing module 83 is configured to acquire and install the application according to the application identification of the application.

Taking an actual application scenario as an example to illustrate, the scenario involves a scenario where an application is installed remotely:
When an application needs to be installed in a smart device, based on the present technical solution, the communication module 81 of the smart device may establish a communication connection with the apparatus for installing an application; after the communication connection is established, the user operates the apparatus for installing an application to send a control instruction to the smart device through the established communication connection, wherein the control instruction includes application identification of the application that the user intends to install in the smart device. Correspondingly, after the receiving module 82 receives the control instruction, the processing module 83 acquires the corresponding application and installs the application.

Accordingly, in the smart device provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

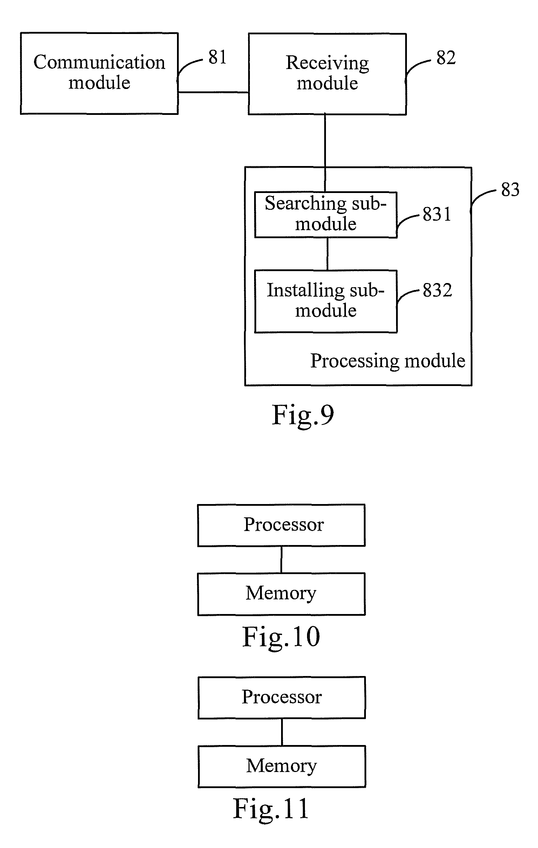

Fig. 9 is a block diagram of a smart device according to another exemplary embodiment. As shown in Fig. 9, based on any above implementation described above, the control instruction includes the application identification of the application and identification of an application store, and the apparatus for installing an application is installed with the application store; and
correspondingly, the processing module 83 includes:
a searching sub-module 831 configured to call the application store according to the identification of the application store, and search the application store to acquire the application according to the application identification of the application; and
an installing sub-module 832 configured to install the application.

Wherein the application store is an electric application store that specially provides application download services for a smart device (such as a mobile device cellphone, a tablet computer and the like).

Taking an actual application scenario as an example to illustrate, the scenario involves a scenario where an application is installed remotely:
when a user intends to install an application in a smart device, based on the present technical solution, the communication module 81 of the smart device may establish a communication connection with the apparatus for installing an application; after the communication connection is established, the apparatus for installing an application acquires application stores both installed in the apparatus for installing an application and the smart device according to the application stores installed in the apparatus for installing an application and the application stores installed in the smart device; the apparatus for installing an application sends a control instruction to the receiving module 82 through the established communication connection, wherein the control instruction includes application identification of the application that the user intends to install in the smart device and identification of the application store. Correspondingly, after the receiving module 82 receives the control instruction, the searching sub-module 831 opens the corresponding application store to acquire the corresponding application and the installing sub-module 832 installs the application.

Accordingly, in the smart device provided by the present embodiment, when a user intends to install an application in a smart device, a communication connection between the apparatus for installing an application and the smart device is established. A control instruction is sent to the smart device through the apparatus for installing an application, wherein the control instruction includes application identification of an application that needs to be installed and identification of an application store used to acquire the application. The smart device opens a corresponding application store according to the control instruction, acquires the application from the application store, and accomplishes the installation of the application. Through the above technical solution, an application that needs to be installed may be acquired quickly and accurately, which avoids mistakenly installing an application due to similar application identification, so as to improve efficiency and accuracy of installing an application.

Internal functions and structures of the apparatus for installing an application and the smart device are described above.

Fig. 10 is a block diagram of an apparatus for installing an application according to an exemplary embodiment. As shown in Fig. 10, the apparatus for installing an application may be implemented as:
a processor; and
a memory for storing instructions executable by the processor;
wherein the processor is configured to perform: establishing a communication connection with a smart device; and sending a control instruction to the smart device through the communication connection, wherein the control instruction includes application identification of the application, and the control instruction is configured to instruct the smart device to acquire and install the application according to the application identification of the application.

Accordingly, in the apparatus for installing an application provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

Fig. 11 is a block diagram of a smart device according to an exemplary embodiment. As shown in Fig. 11, the smart device may be implemented as:
a processor; and
a memory for storing instructions executable by the processor;
wherein the processor is configured to perform: establishing a communication connection with an apparatus for installing an application; receiving a control instruction sent by the apparatus for installing an application through the communication connection, wherein the control instruction includes application identification of the application; and acquiring and installing the application according to the application identification of the application.

Accordingly, in the smart device provided by the present embodiment, when a user intends to install an application in a smart device not convenient to be directly operated, an apparatus for installing an application convenient for the user to operate may be prepared in advance. A communication connection between the apparatus for installing an application and the smart device is established. The user sends a control instruction to the smart device through the apparatus for installing an application, wherein the control instruction includes application identification of the application that the user intends to install in the smart device. The smart device may accomplish the installation of the application according to the control instruction. Wherein the apparatus for installing an application may be provided in another smart device. Through the above technical solution, a user may install an application for the smart device remotely by using any smart device. That is, no matter when and no matter where, as long as the user has an apparatus for installing an application convenient for operations in his/her hand, he/she may conveniently install applications that need to be installed for any other smart device.

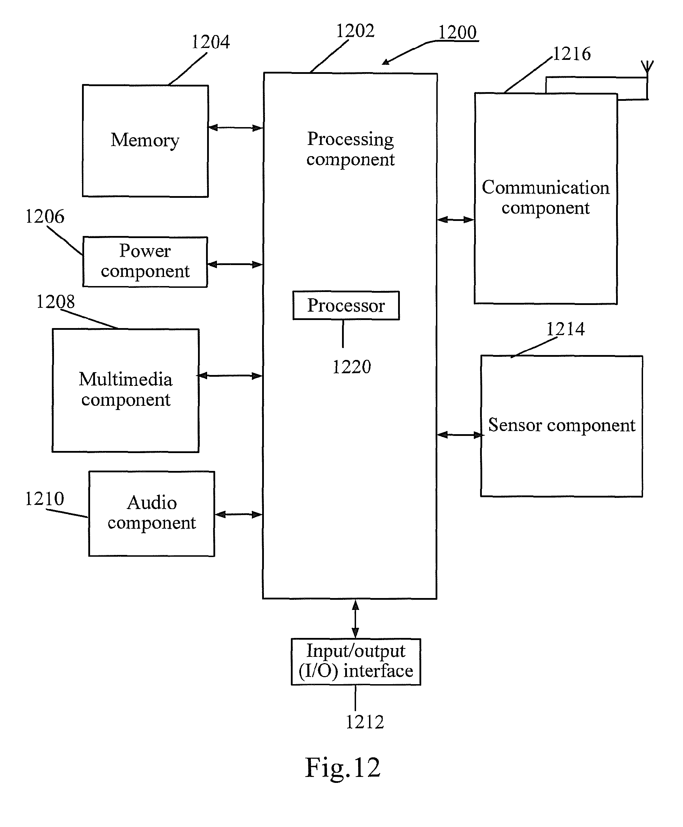

Fig. 12 is a block diagram of an apparatus 1200 for installing an application according to an exemplary embodiment, which may be provided in another smart device. For example, the apparatus 1200 for installing an application may be a mobile phone, a computer, a digital broadcast terminal, a messaging device, a gaming console, a tablet, a medical device, exercise equipment, a personal digital assistant, and the like.

Referring to Fig. 12, the apparatus 1200 for installing an application may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200 for installing an application, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operations of the apparatus 1200 for installing an application. Examples of such data include instructions for any applications or methods operated on the apparatus 1200 for installing an application, contact data, phonebook data, messages, pictures, video, etc. The memory 1204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200 for installing an application. The power component 1206 may include a power management system, one or more power sources, and any other components associated with the generation, management, and distribution of power in the apparatus 1200 for installing an application.

The multimedia component 1208 includes a screen providing an output interface between the apparatus 1200 for installing an application and the user. In embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In embodiments, the multimedia component 1208 includes a front camera and/or a rear camera. The front camera and the rear camera may receive an external multimedia datum while the apparatus 1200 for installing an application is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 for installing an application is in an operation mode, such as a call mode, a recording mode, and a voice recognition mode. The received audio signal may be further stored in the memory 1204 or transmitted via the communication component 1216. In embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide state assessments of various aspects of the apparatus 1200 for installing an application. For instance, the sensor component 1214 may detect an open/closed state of the apparatus 1200 for installing an application, relative positioning of components, e.g., the display and the keypad, of the apparatus 1200 for installing an application, a change in position of the apparatus 1200 for installing an application or a component of the apparatus 1200 for installing an application, a presence or absence of user contact with the apparatus 1200 for installing an application, an orientation or an acceleration/deceleration of the apparatus 1200 for installing an application, and a change in temperature of the apparatus 1200 for installing an application. The sensor component 1214 may include a proximity sensor configured to detect the presence of nearby objects without any physical contact. The sensor component 1214 may further include a light sensor, such as a CMOS or CCD image sensor, for use in imaging applications. In embodiments, the sensor component 1214 may further include an accelerometer sensor, a gyroscope sensor, a magnetic sensor, a pressure sensor or a temperature sensor.

The communication component 1216 is configured to facilitate communication, wired or wirelessly, between the apparatus 1200 for installing an application and other devices. The apparatus 1200 for installing an application may access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 for installing an application may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is further provided a non-transitory computer-readable storage medium including instructions, such as included in the memory 1204, executable by the processor 1220 in the apparatus 1200 for installing an application, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of a mobile terminal, the mobile terminal is caused to perform a method for installing an application, including:
establishing a communication connection with a smart device; and sending a control instruction to the smart device through the communication connection, wherein the control instruction includes application identification of the application, and the control instruction is configured to instruct the smart device to acquire and install the application according to the application identification of the application.

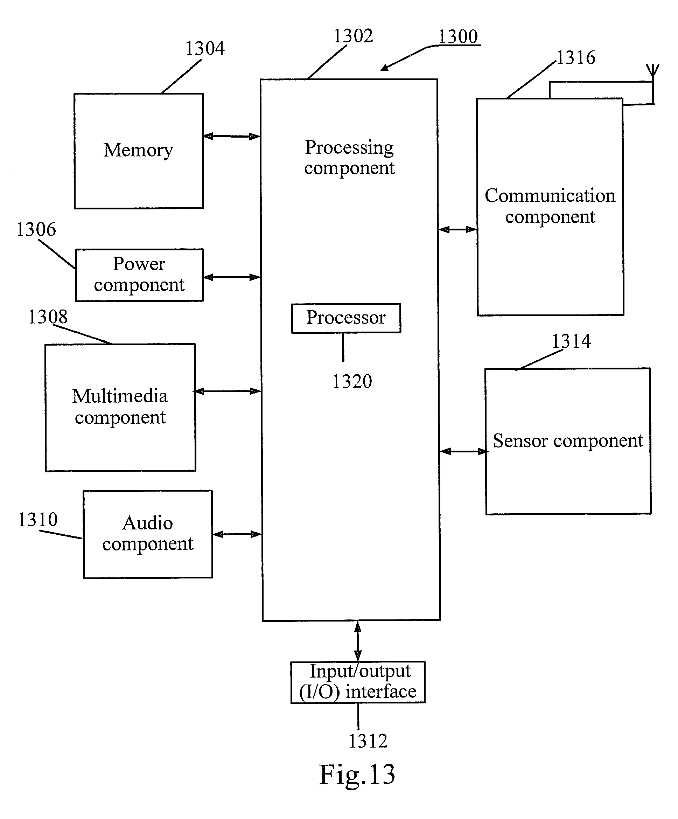

Fig. 13 is a block diagram of a smart device 1300 according to an exemplary embodiment. For example, the smart device 1300 may be a mobile phone, a computer, a digital broadcast terminal, a messaging device, a gaming console, a tablet, a medical device, exercise equipment, a personal digital assistant, and the like.

Referring to Fig. 13, the smart device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the smart device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operations of the smart device 1300. Examples of such data include instructions for any applications or methods operated on the apparatus for installing an application 1300, contact data, phonebook data, messages, pictures, video, etc. The memory 1304 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the smart device 1300. The power component 1306 may include a power management system, one or more power sources, and any other components associated with the generation, management, and distribution of power in the smart device 1300.

The multimedia component 1308 includes a screen providing an output interface between the smart device 1300 and the user. In embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In embodiments, the multimedia component 1308 includes a front camera and/or a rear camera. The front camera and the rear camera may receive an external multimedia datum while the smart device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the smart device 1300 is in an operation mode, such as a call mode, a recording mode, and a voice recognition mode. The received audio signal may be further stored in the memory 1304 or transmitted via the communication component 1316. In embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide state assessments of various aspects of the smart device 1300. For instance, the sensor component 1314 may detect an open/closed state of the smart device 1300, relative positioning of components, e.g., the display and the keypad, of the smart device 1300, a change in position of the smart device 1300 or a component of the smart device 1300, a presence or absence of user contact with the smart device 1300, an orientation or an acceleration/deceleration of the smart device 1300, and a change in temperature of the smart device 1300. The sensor component 1314 may include a proximity sensor configured to detect the presence of nearby objects without any physical contact. The sensor component 1314 may further include a light sensor, such as a CMOS or CCD image sensor, for use in imaging applications. In embodiments, the sensor component 1314 may further include an accelerometer sensor, a gyroscope sensor, a magnetic sensor, a pressure sensor or a temperature sensor.

The communication component 1316 is configured to facilitate communication, wired or wirelessly, between the smart device 1300 and other devices. The smart device 1300 may access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the smart device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is further provided a non-transitory computer-readable storage medium including instructions, such as included in the memory 1304, executable by the processor 1320 in the smart device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of a mobile terminal, the mobile terminal is caused to perform a method for installing an application, including:
establishing a communication connection with a smart device; and sending a control instruction to the smart device through the communication connection, wherein the control instruction includes application identification of an application, and the control instruction is configured to instruct the smart device to acquire and install the application according to the application identification of the application.

Those skilled in the art shall clearly learn about that, for convenience and briefness of the description, the specific working process of the apparatus for installing an application and the smart device described above may refer to the corresponding process of the method embodiment described above.

## Claims

1. A method for installing an application, performed on an apparatus for installing an application, comprising:
establishing (101) a communication connection with a smart device; and
sending (102) a control instruction to the smart device through the communication connection, wherein the control instruction comprises application identification of the application, and the control instruction is configured to instruct the smart device to acquire and install the application according to the application identification of the application.

2. The method of claim 1, wherein the step of sending (102) a control instruction to the smart device through the communication connection comprises:
acquiring (201) identification of an application store, wherein the smart device is installed with the application store, and the application store is configured to provide an installation package for the smart device to download the application; and
sending (202) a control instruction to the smart device through the communication connection, wherein the control instruction comprises the application identification of the application and the identification of the application store, and the control instruction is configured to instruct the smart device to call the application store according to the identification of the application store, search the application store to acquire the application according to the application identification of the application, and install the application.

3. The method of claim 1 or 2, wherein the step of establishing (101) a communication connection with a smart device comprises:
receiving (103) a connection request sent by the smart device, wherein the connection request comprises device identification of the smart device; and
establishing (104) the communication connection with the smart device according to the device identification of the smart device.

4. A method for installing an application, performed on a smart device, comprising:
establishing (301) a communication connection with an apparatus for installing an application;
receiving (302) a control instruction sent by the apparatus for installing an application through the communication connection, wherein the control instruction comprises application identification of the application; and
acquiring (303) and installing the application according to the application identification of the application.

5. The method of claim 4, wherein the control instruction comprises the application identification of the application and identification of an application store, and the apparatus for installing an application is installed with the application store; and the step of acquiring (303) and installing the application according to the application identification of the application comprises:
calling (401) the application store according to the identification of the application store, searching the application store to acquire the application according to the application identification of the application, and installing the application.

6. The method of claim 4 or 5, wherein the step of establishing (301) a communication connection with an apparatus for installing an application comprises:
sending (304) a connection request to the apparatus for installing an application, wherein the connection request comprises device identification of the smart device, and the connection request is configured to make the apparatus for installing an application establish a communication connection with the smart device according to the device identification of the smart device.

7. An apparatus for installing an application, comprising:
a communication module (61) configured to establish a communication connection with a smart device; and
a sending module (62) configured to send a control instruction to the smart device through the communication connection, wherein the control instruction comprises application identification of the application, and the control instruction is configured to instruct the smart device to acquire and install the application according to the application identification of the application.

8. The apparatus for installing an application of claim 7, wherein the sending module (62) comprises:
an acquiring sub-module (621) configured to acquire identification of an application store, wherein the smart device is installed with the application store, and the application store is configured to provide an installation package for the smart device to download the application; and
a sending sub-module (622) configured to send a control instruction to the smart device through the communication connection, wherein the control instruction comprises application identification of the application and the identification of the application store, and the control instruction is configured to instruct the smart device to call the application store according to the identification of the application store, search the application store to acquire the application according to the application identification of the application, and install the application.

9. The apparatus for installing an application of claim 7 or 8, wherein the communication module (61) comprises:
a receiving sub-module (611) configured to receive a connection request sent by the smart device, wherein the connection request comprises device identification of the smart device; and
a communication sub-module (612) configured to establish the communication connection with the smart device according to the device identification of the smart device.

10. A smart device, comprising:
a communication module (81) configured to establish a communication connection with an apparatus for installing an application;
a receiving module (82) configured to receive a control instruction sent by the apparatus for installing an application through the communication connection, wherein the control instruction includes application identification of the application; and
a processing module (83) configured to acquire and install the application according to the application identification of the application.

11. The apparatus for installing an application of claim 10, wherein the control instruction comprises the application identification of the application and identification of an application store, and the apparatus for installing an application is installed with the application store; and
the processing module (83) comprises:
a searching sub-module (831) configured to call the application store according to the identification of the application store, and search the application store to acquire the application according to the application identification of the application; and
an installing sub-module (832) configured to install the application.

12. The apparatus for installing an application of claim 10 or 11, wherein the communication module (81) comprises:
a sending sub-module (811) configured to send a connection request to the apparatus for installing an application, wherein the connection request comprises device identification of the smart device, and the connection request is configured to make the apparatus for installing an application establish a communication connection with the smart device according to the device identification of the smart device.

13. An apparatus for installing an application, comprising:
a processor (1220); and
a memory (1204) for storing instructions executable by the processor (1220),
wherein the processor (1220) is configured to perform: establishing a communication connection with a smart device; and sending a control instruction to the smart device through the communication connection, wherein the control instruction comprises application identification of the application, and the control instruction is configured to instruct the smart device to acquire and install the application according to the application identification of the application.

14. A smart device, comprising:
a processor (1320); and
a memory (1304) for storing instructions executable by the processor (1320),
wherein the processor (1320) is configured to perform: establishing a communication connection with an apparatus for installing an application; receiving a control instruction sent by the apparatus for installing an application through the communication connection, wherein the control instruction includes application identification of the application; and acquiring and installing the application according to the application identification of the application.

15. A computer program including instructions for executing the steps of a method for installing an application according to any one of claims 1 to 6 when said program is executed by a computer.
